## Europäisches Patentamt

## European Patent Office

## Office européen des brevets

(19)

(11) Veröffentlichungsnummer: **0 110 210**
**B1**

(12) **EUROPÄISCHE PATENTSCHRIFT**

(45) Veröffentlichungstag der Patentschrift: 04.02.87

(51) Int. Cl.⁴: **F 16 K 17/10**

(21) Anmeldenummer: 83111216.4

(22) Anmeldetag: 10.11.83

(54) Einrichtung zum Steuern eines Sicherheitsventils.

(30) Priorität: 30.11.82 CH 6930/82

(43) Veröffentlichungstag der Anmeldung: 13.06.84 Patentblatt 84/24

(45) Bekanntmachung des Hinweises auf die Patenterteilung: 04.02.87 Patentblatt 87/6

(84) Benannte Vertragsstaaten: BE DE FR GB SE

(56) Entgegenhaltungen:
DE-C-10 546
DE-C-1 015 293
GB-A-1 411 921
US-A-2 689 583
US-A-3 414 008
US-A-3 952 771

(73) Patentinhaber: GEBRÜDER SULZER AKTIENGESELLSCHAFT, Zürcherstrasse 9, CH-8401 Winterthur (CH)

(72) Erfinder: Tiefenthaler, Edelbert, Schützenhausstrasse, CH- 8353 Elgg (CH)

(74) Vertreter: Dipl.- Ing. H. Marsch Dipl.- Ing. K. Sparing Dipl.- Phys.Dr. W.H. Röhl Patentanwälte, Rethelstrasse 123, D-4000 Düsseldorf (DE)

EP 0 110 210 B1

## Beschreibung

Die Erfindung betrifft eine Einrichtung zum Steuern des SSchliessteils eines mit einem Servokolben versehenen Sicherheitsventils nach dem Oberbegriff des Anspruchs 1.

Es ist eine solche Einrichtung bekannt, wobei der durch das Sicherheitsventil zu limitierende Druck unmittelbar auf das Hilfsventil wirkt und wobei ausser dem Hilfsventil ein Entlastungsventil vorgesehen ist. Dieses Entlastungsventil ist starr mit einem Kölbchen verbunden, dessen beide Kolbenräume über eine Drosselstelle miteinander verbunden sind und dessen einer Kolbenraum bei geöffnetem Hilfsventil vom zu limitierenden Druck beaufschlagt wird, was ein Oeffnen des Entlastungsventils zur Folge hat. Es hat sich nun gezeigt, dass diese Einrichtung die Eigenschaft hat, beim Ansprechen zu schwingen, was zu einem ungenauen und verspäteten Oeffnen des Sicherheitsventils und gegebenenfalls zu einem bezüglich des abzusichernden Druckes ungenauen Schliessen des Sicherheitsventils führt. Es ist Aufgabe der Erfindung, eine Einrichtung zu schaffen, die beim Ansprechen nicht ins Schwingen gerät und bei der sich das Sicherheitsventil exakt und zuverlässig öffnen und schliessen lässt.

Diese Aufgabe wird durch die Merkmale des Kennzeichens des Anspruchs 1 gelöst. Es ergibt sich dabei der zusätzliche Vorteil, dass die Einrichtung konstruktiv einfacher wird, wodurch auch ihre Zuverlässigkeit steigt.

Die Weiterbildung der Erfindung gemäss Anspruch 2 stellt eine besonders einfache Lösung für den Fall eines Sicherheitsventils mit verhältnismässig kleinem Servokolben dar.

Das Merkmal nach Anspruch 3 bringt eine zusätzliche Erhöhung der Oeffnungsgeschwindigkeit des Sicherheitsventils, da bereits eine sehr kleine Durchflussmenge durch das Hilfsventil die auf seinen Schliesskörper wirkende Oeffnungskraft erheblich steigert.

Die Merkmale im Anspruch 4 haben sich im Falle eines Sicherheitsventils mit grossem 8ervokolben als günstig erwiesen, indem sie den Aufwand für die ganze Einrichtung klein halten.

Die Erfindung wird nun anhand der Zeichnung aufgrund von zwei schematisch dargestellten Ausführungsbeispielen näher erläutert. Es zeigen:

Fig. 1 einen Vertikalschnitt durch die erfindungsgemässe Einrichtung und ein damit verbundenes Sicherheitsventil,

Fig. 2 einen Ausschnitt aus Fig. 1 in vergrössertem Maßstab und

Fig. 3 einen Schnitt durch eine erfindungsgemässe Einrichtung für ein grosses Sicherheitsventil, wobei dieses in stark verkleinertem Maßstab dargestellt ist.

Die drei Figuren sind maßstäblich zum Teil stark verzerrt dargestellt. Im folgenden Text verwendete Lagebezeichnungen beziehen sich auf die Zeichnung und die betroffenen Teile können in Wirklichkeit in beliebiger Richtung im Raum angeordnet sein.

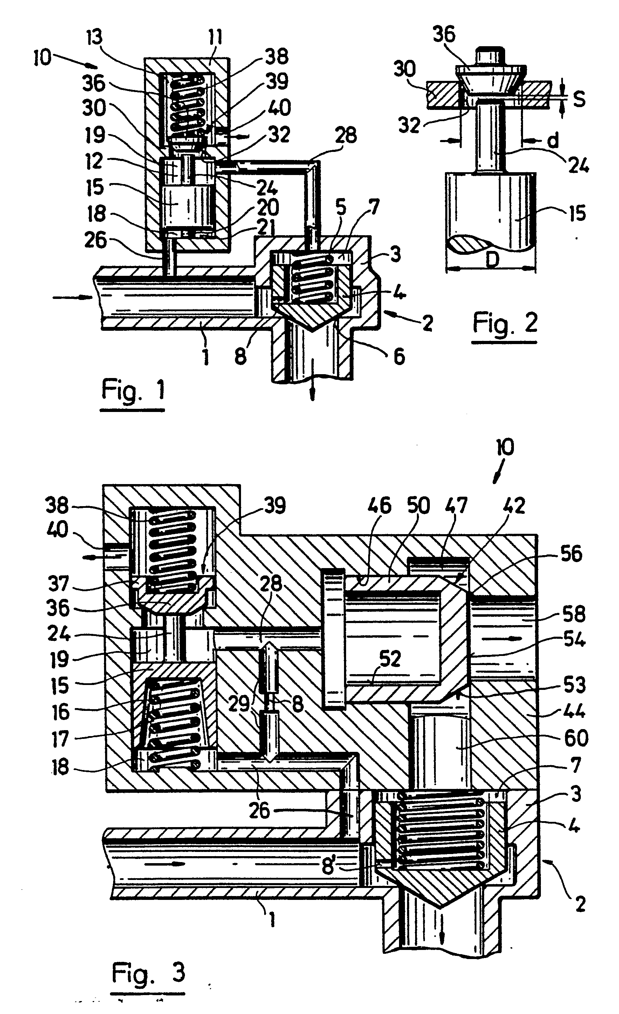

Gemäss Fig. 1 endet eine gegen zu hohen Druck abzusichernde Dampfleitung 1 an einem Sicherheitsventil 2, das im wesentlichen aus einem Ventilgehäuse 3 und einermals Servokolben ausgebildeten Schliessteil 4 besteht. Das Schliessteil 4 wird durch eine Feder 5 auf einen Ventilsitz 6 gepresst. In der Wand des Schliessteils 4 ist eine Drosselbohrung 8 vorgesehen, die in der Leitung 1 befindlichen Dampf in den Raum 7 oberhalb des Schliessteils 4 strömen lässt. Das Schliessteil 4 wird somit zusätzlich zur Feder 5 vom Dampfdruck im Raum 7 auf den Ventilsitz 6 gepresst, so dass das Sicherheitsventil 2 dicht schliesst.

Die erfindungsgemässe Einrichtung 10 umfasst ein Gehäuse 11 mit zwei Abteilen 12 und 13. In dem Abteil 12 befindet sich ein Kölbchen 15, das dieses Abteil in einen ersten, den sog. "einen" Kolbenraum 18 und in einen zweiten, den sog. "anderen" Kolbenraum 19 unterteilt. Die Unterseite des Köbchens 15 ist mit einem kurzen Fortsatz 20 versehen, mit dem das Kölbchen auf der unteren Stirnseite 21 des einen Kolbenraums 18 sitzt. An der Oberseite des Kölbchens 15 ist koaxial zu ihm ein langer, nach oben ragender Fortsatz 24 vorgesehen. Der eine Kolbenraum 18 ist über eine Leitung 26 mit der Dampfleitung 1 verbunden, d.h. mit dem vom Sicherheitsventil 2 vor zu hohem Druck zu schützenden Raum. Der andere Kolbenraum 19 ist über eine Leitung 28 am Raum 7 im Ventilgehäuse 3 angeschlossen. Eine Wand 30 zwischen den Abteilen 12 und 13 des Gehäuses 11 weist eine Bohrung 32 auf, die mit ihrem dem Abteil 13 zugewendeten Ende einen Ventilsitz für ein Hilfsventil 39 bildet. Das Hilfsventil weist einen Schliesskörper 36 auf, der von einer im Abteil 13 untergebrachten Feder 38 auf den Ventilsitz gepresst wird. Das Abteil 13 steht über eine Oeffnung 40 im Gehäuse 11 mit der Atmosphäre in Verbindung.

Gemäss Fig. 2 ist der Durchmesser d des Ventilsitzes des Hilfsventils 39 und damit die dem Druck im anderen Kolbenraum 19 ausgesetzte Fläche des Schliesskörpers 36 erheblich kleiner als der Durchmesser D des Kölbchens 15. Ausserdem ist zwischen der Stirnfläche des langen Fortsatzes 24 und der benachbarten Stirnfläche des Schliesskörpers 36 ein geringes Spiel S vorgesehen.

Die Einrichtung 10 funktioniert wie folgt: Im Normalbetrieb der das Sicherheitsventil 2 enthaltenden Anlage breitet sich der in der Leitung 1 befindliche Dampf über die Leitung 26 in den einen Kolbenraum 18 und - wie schon erwähnt - über die Drosselbohrung 8 in den Raum 7 oberhalb des Schliessteils 4 und von dort über die Leitung 28 in den anderen Kolbenraum 19 aus. Das Kölbchen 15 ist bezüglich des Dampfdruckes im Gleichgewicht; es ruht folglich mit seinem unteren Fortsatz 20 auf der unteren Stirnseite 21 des Gehäuses 11. Der Druck im anderen Kolbenraum 19 genügt nicht, den Schliesskörper 36 gegen die Wirkung der Feder 38 anzuheben.

Steigt nun der Druck in der Dampfleitung 1 langsam an, so genügt zunächst die Druckdifferenz am Kölbchen 15-hervorgerufen durch die Drosselung an der Drosselbohrung 8 - nicht, das Kölbchen 15 anzuheben. Beim Erreichen des Sicherheitsdruckes hebt sich jedoch der Schliesskörper 36, so dass Dampf aus dem anderen Kolbenraum 19 in das Abteil 13 strömt. Dieses Abströmen hat eine Druckabsenkung im anderen Kolbenraum 19 zur Folge, wodurch die auf den Schliesskörper 36 wirkende Hebekraft verringert wird. Andererseits bewirkt die Druckabsenkung im Raum 19 aber, dass sich das Kölbchen 15 hebt und wegen seiner grösseren Fläche, nach Ausgleich des Spiels S, den Verlust an Hebekraft ann Schliesskörper 36 überkompensiert und das Hilfsventil 39 weiter öffnet. Damit sinkt der Druck im Raum 7 des Sicherheitsventils 2 auf einen so tiefen Wert, dass der am Schliessteil 4 auf die ausserhalb des Ventilsitzes/befindliche Ringfläche wirkende Druck die Kraft der Feder 5 überwindet und das Sicherheitsventil sich öffnet.

Die Durchmesser d und D sind so bemessen, dass nach dem Absinken des Dampfdruckes in der Leitung 1 unter einen vorgesehenen Grenzwert der Schliesskörper 36 sich schwingungsfrei absetzt. Dadurch staut sich im Raum 7 ein Druck auf, der zum Schliessen des Sicherheitsventils 2 führt.

Wie diese Funktionsbeschreibung zeigt, hat die Drosselbohrung 8 sowohl Funktionen der Einrichtung 10 wie auch des Sicherheitsventils 2 zu erfüllen. Sie wird hier als Bestandteil sowohl der Einrichtung 10 als auch des Sicherheitsventils 2 betrachtet.

Damit das Sicherheitsventil 2 zuverlässig funktioniert, muss die Drosselbohrung 8 in Abhängigkeit des Durchmessers des Schliessteils 4 genügend gross bemessen werden. Dies führt zu bestimmten Grössen für die Durchmesser d und D. Hat das Sicherheitsventil 2 einen grossen Sitzdurchmesser von beispielsweise 300 mm, so würde eine Einrichtung nach Fig. 1 sehr gross und teuer. Es ist in diesem Fall zweckmässig, die Einrichtung 10 nach Fig. 3 auszubilden.

Das Ausführungsbeispiel nach Fig. 3 unterscheidet sich von jenem nach Fig. 1 vor allem durch das Vorhandensein eines Verstärkungsventils 42 sowie dadurch, dass die Einrichtung 10 in einem Deckel 44 des Sicherheitsventils 2 integriert ist. Ueberdies ist das Hilfsventil 39 als Differentialventil ausgebildet, indem am Schliesskörper 36 ein Kragen 37 angeordnet ist, der mit der zylindrischen Wand des Abteils 13 zusammen eine dem Hilfsventil-Querschnitt nachgeschaltete, ringförmige Drosselstelle bildet. Durch diese Drosselstelle wird beim initialen Abheben des Schliesskörpers 36 im Ringbereich unterhalb des Kragens 37 Dampf aufgestaut, der zu einer zusätzlichen Oeffnungskraft führt und damit die Oeffnungsgeschwindigkeit des Ventils erhöht. Da zunächst am Hilfsventil-Querschnitt überkritischer Druckabfall herrscht, hat dieser Aufstau keinerlei Rückwirkungen auf den Druck im anderen Kolbenraum 19 und auf die Funktionsweise des Kölbchens 15.

Weitere Unterschiede liegen im Vorhandensein einer Feder 16 im einen Kolbenraum 18, die auf das Kölbchen 15 einwirkt, das zur Aufnahme der Feder 16 und zur Verringerung der Masse des Köbchens eine Ausdrehung 17 aufweist. Diese Feder 16 bringt den Vorteil, dass auf ein Spiel S zwischen dem oberen Fortsatz 24 und dem Schliesskörper 36 verzichtet werden kann, was - wie die Massenverringerung des Kölbchens 15 - die Ansprechgeschwindigkeit des Sicherheitsventils erhöht.

Im Ausführungsbeispiel nach Fig. 3 sind die beiden Funktionen, die in Fig. 1 von der einzigen Drosselbohrung 8 ausgeführt werden, auf zwei Drosselbohrungen 8 und 8' aufgeteilt. Die Drosselbohrung 8 der Einrichtung 10 ist hier in einem Leitungsabschnitt 29 zwischen den Leitungen 26 und 28 angeordnet, während die Drosselbohrung 8'' am selben Ort wie in Fig. 1 bleibt.

Das Verstärkungsventil 42 umfasst einen Ventilkolben 50, der in einer Zylinderbohrung 46 mit Zufuhrringraum 47 angeordnet ist, der über einen Zufuhrkanal 60 mit dem Raum 7 im Ventilgehäuse 3 oberhalb des Schliessteils 4 verbunden ist. Der Ventilkolben 50 weist eine zum anderen Kolbenraum 19 hin offene, zylindrische Ausdrehung 52 und an seinem anderen Ende eine konische Andrehung 53 auf. Eine an diese Andrehung 53 anschliessende Stirnfläche 54 wirkt als Ventilteller mit einer Sitzfläche 56 im Deckel 44 zusammen, an die sich ein Abströmkanal 58 anschliesst, der also bei offener Stellung des Ventilkolbens 50 mit dem Zufuhrringraum 47 in Verbindung steht und der - wie die Oeffnung 40 - in die Atmosphäre münden kann. Die Einrichtung 10 nach Fig. 3 funktioniert wie folgt:

Im Normalbetrieb befindet sich in der Leitung 1 Dampf unter Druck, der sich einerseits über die Drosselbohrung 8'' in den Raum 7 sowie über den Zufuhrkanal 60 in den Zufuhrringraum 47 ausbreitet; andererseits breitet sich der Dampf auch über die Leitung 26 in den einen Kolbenraum 18 sowie über die Drosselbohrung 8 und die Leitung 28 in den anderen Kolbenraum 19 und in die Zylinderbohrung 46 aus. Da der Dampf stagniert, herrscht in den genannten Räumen - solange keine Druckänderung auftritt kein Druckunterschied. Die beweglichen, als Ventile wirkenden Teile 4, 50 und 36 ruhen somit fest auf dem ihnen zugeordneten Ventilsitz.

Steigt nun der Dampfdruck in der Leitung 1, so hebt sich der Schliesskörper 36 des Hilfsventils 39 ab. Infolge des Abströmens von Dampf über das Hilfsventil 39 sinkt im anderen Kolbenraum 19 der Druck, sodass das Kölbchen 15 sich aufwärts bewegt und auf den Schliesskörper 36 eine zusätzliche Oeffnungskraft ausübt. Eine weitere zusätzliche Oeffnungskraft resultiert aus dem sich am Kragen 37 des Schliesskörpers 36 aufstauenden Dampf.

Wegen des ständigen Druckabbaus im anderen Kolbenraum 19 wird die auf den Ventilkolben 50 wirkende Schliesskraft verringert, während auf der Fläche der konischen Andrehung 53 noch der volle Dampfdruck von der Leitung 1 her wirkt. Die so auf die konische Andrehung 53 wirkende Oeffnungskraft überwiegt schliesslich die Schliesskraft auf der anderen Seite des Ventilkolbens 50, sodass dieser von der Sitzfläche 56 abhebt. Da der dabei freigegebene Ventilquerschnitt im Vergleich zum Querschnitt der Drosselbohrung 8 sehr gross ist, öffnet das Sicherheitsventil 2 sehr rasch.

Sinkt der Dampfdruck in der Leitung 1 unter einen konstruktiv gegebenen Schwellenwert, der tiefer liegt als der Oeffnungsdruck des Sicherheitsventils 2, so schliesst das Hilfsventil 39. Dadurch steigt der Druck im anderen Kolbenraum 19 und in der Zylinderbohrung 46, worauf der Ventilkolben 50 schliesst. Ueber die Drosselbohrung 8" wird nun der Dampfdruck in der Leitung 1 in den Raum 7 ausgeglichen, sodass der Schliessteil 4 wieder in die Schließstellung fährt.

Die Einrichtung 10 kann in verschiedener Art variiert werden. So lassen sich die Feder 38 durch ein Zusatzgewicht und die Feder 16 - bei umgedrehter Einrichtung durch das Eigengewicht des Kölbchens 15 ersetzen. Zum Verringern des Umfangs der Einrichtung können gewisse Teile von ihr ineinander verschachtelt werden. Durch Vermehren einzelner Organe der Einrichtung 10 lässt sich eeine Redundanz erzielen, die die Funktionssicherheit der Einrichtung erhöht.

Abweichend von den beiden beschriebenen Ausführungsformen ist es auch möglich, die Abhebebewegung des Schliesskörpers 36 des Hilfsventils 39 durch Fühler feststellen zu lassen und abhängig davon die einseitige Entlastung des Servokolbens auszulösen, z.B. durch Betätigen eines separaten am Raum 7 angeschlossenen Ventils.

Die Erfindung ist auch auf andere Sicherheitsventile anwendbar.

**Patentansprüche**

1. Einrichtung zum Steuern des Schliessteils (4) eines Sicherheitsventils (2), wobei das Schliessteil mit einem in einem: Servokolbenraum (7) bewegbaren Servokolben versehen ist und. durch einseitige Entlastung des Servokolbens gesteuert wird, mit einem Hilfsventil (39), dessen Schliesskörper (36) in seiner Schliessrichtung durch eine vorbestimmte Kraft belastet ist und der bei einem dieser Kraft entsprechenden, an ihm anstehenden Druck öffnet, dadurch gekennzeichnet, dass dem Hilfsventil (39) ein Kölbchen (15) zugeordnet ist, dessen beide Kolbenräume (18, 19) über eine Drosselstelle (8) miteinander verbunden sind, dass der eine Kolbenraum (18) des Kölbchens (15) unmittelbar mit dem durch das Sicherheitsventil (2) vor zu hohem Druck zu schützenden Raum verbunden ist, dass der andere Kolbenraum (19) des Kölbchens (15) mit der Zuströmseite des Hilfsventils (39) verbunden ist, dass Mittel (24) zum kraftschlüssigen Einwirken des Kölbchens (15) auf den Schliesskörper (36) des Hilfsventils (39) vorhanden sind, dass die Querschnittfläche des Kölbchens (15) grösser ist als die dem Druck im anderen Kolbenraum (19) ausgesetzte Fläche des Schliesskörpers (36) des Hilfsventils (39) und dass ferner Mittel (28) vorgesehen sind, die bei einer Öffnungsbewegung des Schliesskörpers (36) des Hilfsventils (39) die einseitige Entlastung des Servokolbens bewirken.

2. Einrichtung nach Anspruch 1, dadurch gekennzeichnet, dass die die einseitige Entlastung des Servokolbens bewirkenden Mittel aus einer Verbindungsleitung (28) vom zu entlastenden Servokolbenraum (7) des Sicherheitsventils (2) zur Zuströmseite des Hilfsventils besteht.

3. Einrichtung nach Anspruch 1 oder 2, dadurch gekennzeichnet, dass das Hilfsventil (39) als Differentialventil (36, 37) ausgebildet ist, das bei tieferem Druck schliesst als es öffnet.

4. Einrichtung nach einem der Ansprüche 1 bis 3, dadurch gekennzeichnet, dass der andere Kolbenraum (19) des Kölbchens (15) mit einem Kolbenraum (46) eines Verstärkungsventils (42) verbunden ist, dessen Zuströmseite (60) an den zu entlastenden Servokolbenraum (7) des Sicherheitsventils (2) angeschlossen ist und dessen Abströmseite (58) mit einem Raum tieferen Druckes verbunden ist.

**Claims**

1. A system for controlling the disk (4) of a safety valve (2), the disk having a servo piston which is movable in a servo piston chamber (7) and being actuated by one-sided loading of the servo piston, the system comprising an auxiliary valve (39) whose disk (36) is biased by a predetermined force in its closing direction and which opens in response to a pressure on it corresponding to such predetermined force, characterised in that a plunger (15) is associated with the auxiliary valve (39) and the two chambers (18, 19) on either side of the plunger communicate with one another by way of a restrictor (8), one such chamber (18) communicates directly with the chamber which it is the function of the safety valve (2) to protect against excess pressure, the other plunger-associated chamber (19) communicates with the inflow side of the auxiliary valve (39), means (24) are provided to enable the plunger (15) to act positively on the disk (36) of the auxiliary valve (39), the crosssectional area of the plunger (15) is greater than that area of the auxiliary-valve disk (36) which experiences the pressure in the other plunger-associated chamber (19), and means (28) are provided which respond to an opening movement of the auxiliary-valve disk (36) by loading the servo piston on one side.

2. A system according to claim 1, characterised in that the means producing the loading of the servo piston on one side comprise a connecting line (28) which extends from the safety-valve servo piston chamber (7) required to be relieved of load to the inflow side of the auxiliary valve (39).

3. A system according to claim 1 or 2, characterised in that the auxiliary valve (39) is a differential valve (36, 37) closing at a lower pressure than the pressure at which it opens.

4. A system according to any of claims 1 - 3, characterised in that the other chamber (19) associated with the plunger (15) communicates with a piston chamber (46) of an amplifying valve (42) whose inflow side (60) is connected to the safety-valve servo piston chamber (7) required to be relieved of load and whose outlet side (58) is connected to a chamber at a lower pressure.

**Revendications**

1. Dispositif de commande du membre obturateur (4) d'une soupape (2) de sûreté, le membre obturateur étant muni d'un servopiston mobile logé dans une chambre (7) guide du piston, et commandé par la décharge unilatérale du servopiston, le dispositif comportant une soupape auxiliaire (39) dont le membre obturateur (36) est soumis à une précontrainte prédéteminée dirigée dans le sens de la fermeture du membre obturateur, et est ouvert lorsqu'une pression équivalente à cette précontrainte agit sur lui, caractérisé par le fait qu'à la soupape auxiliaire (39) est associé un petit piston (15) auquel correspondent deux chambres (18, 19) guides du piston, qui sont reliées l'une à l'autre par l'intermédiaire d'un dispositif étrangleur (8) par le fait que l'une des deux chambres (18) guide du piston (15) communique directement avec la chambre à protéger, par la soupape (2) de sûreté, contre une pression trop élevée, et par le fait que l'autre chambre (19) guide du petit piston (15) communique avec le côté d'alimentation de la soupape auxiliaire (39), par le fait que des dispositifs (24) sont prévus, destinés à permettre une action du petit piston (15) sur le membre obturateur (36) de la soupape auxiliaire (39), de manière à transmettre les forces, par le fait que la section du petit piston (15) est supérieure à la surface, soumise à la pression régnant dans l'autre chambre (19) guide du piston, du membre obturateur (36) de la soupape auxiliaire (39), et par le fait que d'autres dispositifs (28) sont prévus, destinés à provoquer, lors de l'ouverture du membre obturateur (36) de la soupape auxiliaire (39), la décharge unilatérale du servopiston.

2. Dispositif selon la revendication 1, caractérisé par le fait que les dispositifs provoquant la décharge unilatérale du servopiston sont constitués d'une conduite (28) de communication entre la chambre à décharger (7) guide de servopiston de la soupape (2) de sûreté et le côté d'alimentation de la soupape auxiliaire.

3. Dispositif selon la revendication 1 ou 2, caractérisé par le fait que la soupape auxiliaire (39) est réalisée sous forme d'une valve à commande différentielle (36, 37) se fermant à une pression inférieure à celle provoquant son ouverture.

4. Dispositif selon une des revendications 1 à 3, caractérisé par le fait que l'autre chambre (19) guide du petit piston (15) communique avec une chambre (46) guide d'un piston d'une valve amplificatrice (42), dont le côté d'alimentation (60) communique avec la chambre à décharger (7) guide du servopiston de la soupape (2) de sûreté, et dont le côté d'échappement (58) communique avec une chambre dans laquelle réside une pression plus faible.

Fig. 1

Fig. 2

Fig. 3